# EUROPEAN PATENT SPECIFICATION

(11) **EP 2 466 759 B1**
(45) Date of publication and mention of the grant of the patent: **11.09.2019**
(21) Application number: 10814901.4
(22) Date of filing: 30.03.2010
(51) Int. Cl.: H04B 7/00, H04W 4/00, H04W 12/10

(54) **METHOD AND SYSTEM FOR CHANGING A SELECTED HOME OPERATOR OF A MACHINE TO MACHINE EQUIPMENT**
WECHSELVERFAHREN UND SYSTEM FÜR AUSGEWÄHLTE HEIMBENUTZER EINER MASCHINE-ZU-MASCHINE-AUSRÜSTUNG
PROCÉDÉ ET SYSTÈME DE CHANGEMENT D'UN OPÉRATEUR NOMINAL SÉLECTIONNÉ D'UN ÉQUIPEMENT DE COMMUNICATION ENTRE MACHINES

(30) Priority: 14.09.2009 CN 200910173202
(43) Date of publication of application: 20.06.2012
(73) Proprietor: ZTE Corporation, Shenzhen, Guangdong 518057 (CN)
(72) Inventor: YU, Wantao, Shenzhen Guangdong 518057 (CN)
(74) Representative: Aipex B.V.
(86) International application number: PCT/CN2010/071401
(87) International publication number: WO 2011/029299

(56) References cited:
- WO-A2-2009/092115
- WO-A2-2009/092115
- WO-A2-2009/103623
- CN-A- 101 489 214
- US-A1- 2009 191 857
- "3rd Generation Partnership Project; Technical Specification Group Services and System Aspects; Feasibility Study on Remote Management of USIM Application on M2M Equipment; (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.3.0, 1 February 2009 (2009-02-01), pages 1-65, XP050376875,
- BT ET AL: "Update of S3-090164: Introducing term MCIM to TR 33.812", 3GPP DRAFT; S3-090203_UPDATED_S3-090164-PCRTOTR33812-M CIM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Florence; 20090114, 14 January 2009 (2009-01-14), XP050334847, [retrieved on 2009-01-14]

## Description

### Technical Field

The present invention relates to an M2M (Machine to Machine) communication technology, and particularly, to a method and system for changing a Selected Home Operator (SHO) of a Machine to Machine Equipment (M2ME).

### Background of the Related Art

The M2M communication is a generic term of a series of techniques and combinations thereof which is used to realize data communication and intercommunication between machines and between the machine and human by applying a wireless communication technology. The M2M has two meanings: one is that, for the machine itself, the machine is referred to as a smart equipment in the embedded field; the second meaning is the connection between the machines, that is, the machines are connected together through the network. The application range of the machine-type communication is very wide, such as intelligent measurement, remote monitoring, tracking and medical, and so on, so as to make human life more intelligent. Compared with the traditional communication between peoples, the number of M2MEs (Machine to Machine Equipment) is huge, the application field is wide, and the market prospect is also huge.

In the M2M communication, the main long-distance connectivity technologies comprise GSM/GPRS/UMTS, and the short-distance connectivity technologies mainly comprise 802.11b/g, Bluetooth, Zigbee, RFID, and so on. The M2M belongs to a service for equipments. Since the M2M integrates the wireless communication and information technology, it can be used for two-way communication, such as long-distance collecting information, setting parameters and sending instructions, so as to realize different application solutions, such as security monitoring, auto sales, cargo tracking, and so on. Almost all equipments involved in the daily life are likely to be potential service objects. The M2M provides a simple means for establishing a wireless connection of equipment real-time data between systems, remote equipments, or individuals.

A challenge of the M2M communication is a remote security management of the deployed M2M equipments. For this purpose, we need to solve how to remotely provide subscription data, i.e., MCIM (Machine Communication Identity Module) to the M2ME and to prevent the MCIM from being obtained and used by a attacker in the provisioning process. The MCIM application is a group of M2M security data and functions for accessing the 3GPP network (which might also be the IMS network). The MCIM can be located in a UICC (Universal Integrated Circuit Card), or a TRE (The Trusted environment) functional entity. When the MCIM is located in the UICC, the MCIM refers to a USIM (Universal Subscriber Identity Module) or an ISIM (IP Multimedia Services Identity Module). The TRE functional entity refers to a trusted environment functional entity provided by the M2ME, and one TRE functional entity can be verified by an authorized external proxy at any time if needed. The MCIM can be installed in the TRE functional entity, and the M2ME provides hardware and software protection and isolation for the MCIM through the TRE functional entity.

At present, the M2ME provides the M2M services usually by two ways: based on the UICC or based on the TRE functional entity.

When the M2ME provides the M2M services based on the UICC, there are two solutions for how to remotely change the subscription data, that is, change the selected home operator of the M2M equipment:
1. the solution in which the subscription data cannot be remotely changed: this solution can conveniently provide the M2M services to the M2ME, whereas, when the M2M service subscriber wants to change the operator of the M2M service, the UICC must be replaced, which makes the M2ME maintenance very difficult, and even if it is possible, it is very costly; thus this solution cannot realize the MCIM remote management for the M2ME;
2. the solution in which the subscription data can be remotely changed: if the selected home operator is determined when the UICC is issued, this solution does not have the problem of initial providing of the MCIM; however, if the selected home operator is determined after the UICC is issued, initially providing the MCIM to the UICC is a problem to be solved; in addition, this solution changes the operator by changing the IMSI (International Mobile Subscriber Identity), and although it can be conveniently to manage the M2ME, this solution relates to the IMSI transferring between different mobile operators' networks, thereby increasing the security risk of the subscription data of the M2ME; and meanwhile, in the process of changing the IMSI, the UICC might break its connection with any operator.

When the M2ME provides the M2M services based on the TRE functional entity, the MCIM provided remotely is installed in the TRE functional entity through the initial connection provided by the TRE functional entity. Its drawback is that protection for the MCIM depends on the security of the TRE functional entity. Since the TRE functional entity is realized in the M2ME, the security of the TRE functional entity is lower than the UICC; thus the security of the MCIM in the TRE functional entity is not high. The problem of the solution of changing the selected home operator of the M2M equipment based on the TRE function entity is still in that: the security of the MCIM is hard to be guaranteed after the MCIM is provided to the TRE functional entity.

The document "3rd Generation Partnership Project; Technical Specification Group Services and System Aspects; Feasibility Study on Remote Management of USIM Application on M2M Equipment; (release 9)", 3GPP TR 33.812, discloses: Re-provisioning of a new MCIM due to a change of SHO is performed by using connectivity provided by old SHO. THE M2MES which manufactures the M2M equipments that host the TRE is trusted by the RO and the SHO. A TRE should be able to support and enforce security controls relating to MCIMs. A TRE should support a secure update service for MCIMs and the use of standardised protocols.

The document BT et al. "Update of S3-090164: Introducing term MCIM to TR 33.812" discloses: Connectivity Services provide connectivity to the M2M equipment, and include operator of 3GPP networks that provide connectivity services for initial network access, registration or operational use of the M2ME. Before connection to a provisioning or management service can be achieved for the first time, initial network connectivity must be achieved to an IP network. Once initial IP connectivity is set up, the M2M equipment needs to know the address of one or more servers in order to proceed with provisioning process.

The document WO 2009/092115 A2 discloses a method for performing secure M2M provisioning and communication, a method for use in validating, authenticating and provisioning an M2ME.

The document US 2009/0191857 A1 discloses a method for remotely updating stored subscriber identification parameters over a wireless network, the method comprising: establishing new parameters from a new operator for updating stored subscriber identification; checking integrity of the new parameters using data received from an old network operator; stopping a connection to the network; and reestablishing the connection using the new parameters.

### Content of the Invention

The technical problem to be solved in the present invention is to provide a method and system for changing a selected home operator of an M2M equipment, which combines a TRE functional entity and a UICC to realize changing the selected home operator of the M2ME.

In order to solve the aforementioned technical problem, the present invention provides a method for changing a selected home operator of a machine to machine (M2M) equipment, comprising:
mode one: a new selected home operator (SHO) receiving parameters of a machine to machine equipment (M2ME), and after verifying the M2ME by a platform validation authority center (PVA) and the M2ME passes the verification, providing a machine communication identity module (MCIM) of the new SHO to the M2ME by a connection between the M2ME and a registration operator (RO) provided by an old SHO; and the M2ME installing the new MCIM in a universal integrated circuit card (UICC); or,
mode two: a new SHO receiving parameters of an M2ME, and after verifying the M2ME by a PVA and the M2ME passes the verification, providing an MCIM of the new SHO to the M2ME through a connection between the M2ME and a RO established by a trusted environment (TRE) functional entity; and the M2ME installing the new MCIM in a UICC;
wherein, both the UICC and the TRE functional entity are located in the M2ME.

In the mode one, the step of the new SHO receiving the parameters of the M2ME and providing the MCIM to the M2ME comprises:
an M2ME subscriber sending the parameters of the M2ME to the new SHO, and notifying the M2ME to execute an MCIM re-provisioning;
the new SHO, after verifying the M2ME by the PVA and the M2ME passes the verification, sending the MCIM of the new SHO to the RO;
the RO sending the new MCIM to the M2ME through the connection provided by the old SHO.

The aforementioned method can also have the following feature:
after performing the step of the RO sending the new MCIM to the M2ME, and before performing the step of the M2ME installing the new MCIM in the UICC, a step further performed is:
the M2ME deleting information of the old SHO in the M2ME, wherein the information of the old SHO comprises the MCIM of the old SHO.

In the mode two, the step of the new SHO receiving the parameters of the M2ME and providing the MCIM to the M2ME comprises:
an M2ME subscriber sending the parameters of the M2ME to the new SHO, and notifying the M2ME to execute an MCIM re-provisioning, and, sending information of the new SHO and the parameters of the M2ME to the RO;
the RO activating the TRE functional entity in the M2ME;
the M2ME establishing the connection with the RO through the TRE functional entity, and the RO registering the M2ME in the new SHO;
the new SHO, after verifying the M2ME by the PVA and the M2ME passes the verification, authorizing the RO to provide the MCIM of the new SHO;
the RO sending the new MCIM to the M2ME through the connection established by the TRE functional entity.

The aforementioned method can also have the following feature:
after performing the step of the RO activating the TRE functional entity in the M2ME and before performing the step of the M2ME establishing the connection with the RO through the TRE functional entity, a step further performed is: the M2ME deleting information of the old SHO in the M2ME; or,
after performing the step of the RO sending the new MCIM to the M2ME and before performing the step of the M2ME installing the new MCIM in the UICC, a step further performed is: the M2ME deleting information of the old SHO in the M2ME;
wherein, the information of the old SHO comprises the MCIM of the old SHO.

In the mode two, the step of the new SHO receiving the parameters of the M2ME and providing the MCIM to the M2ME comprises:
an M2ME subscriber sending the parameters of the M2ME to the new SHO, and notifying the M2ME to execute an MCIM re-provisioning, and, sending information of the new SHO and the parameters of the M2ME to the RO;
the RO notifying the old SHO that the M2ME changes the SHO;
the old SHO activating the TRE functional entity in the M2ME through an over the air (OTA) mode;
the M2ME establishing the connection with the RO through the TRE functional entity, and the RO registering the M2ME in the new SHO;
the new SHO, after verifying the M2ME by the PVA and the M2ME passes the verification, authorizing the RO to provide the MCIM of the new SHO;
the RO sending the new MCIM to the M2ME through the connection established by the TRE functional entity.

In the mode two, the step of the new SHO receiving the parameters of the M2ME and providing the MCIM to the M2ME comprises:
an M2ME subscriber sending the parameters of the M2ME to the new SHO, and notifying the M2ME to execute an MCIM re-provisioning, and, sending information of the new SHO and the parameters of the M2ME to the old SHO;
the old SHO activating the TRE functional entity in the M2ME through an over the air (OTA) mode;
the M2ME establishing the connection with the RO through the TRE functional entity, and the RO registering the M2ME in the new SHO;
the new SHO, after verifying the M2ME by the PVA and the M2ME passes the verification, authorizing the RO to provide the MCIM of the new SHO;
the RO sending the new MCIM to the M2ME through the connection established by the TRE functional entity.

The aforementioned method can also have the following feature:
in the step of the old SHO activating the TRE functional entity in the M2ME, the old SHO further deletes information of the old SHO in the M2ME at the same time; or,
after performing the step of the RO sending the new MCIM to the M2ME and before performing the step of the M2ME installing the new MCIM in the UICC, a step further performed is: the M2ME deleting information of the old SHO in the M2ME;
wherein, the information of the old SHO comprises the MCIM of the old SHO.

The aforementioned method can also have the following feature:
the step of the M2ME establishing the connection with the RO through the TRE functional entity and the RO registering the M2ME in the new SHO comprises:
the M2ME establishing an initial connection with a randomly selected visited network operator (VNO) through the TRE functional entity;
the VNO contacting with the RO, and sending a provisional connectivity identity (PCID) received from the M2ME to the RO;
the RO generating a set of authentication vectors regarding to the PCID, and sending to the VNO;
the VNO authenticating the PCID and the M2ME by using the authentication vectors, and after the authentication is passed, the VNO providing the M2ME with an IP connection to the RO;
the M2ME contacting with the RO through the IP connection provided by the VNO;
the RO discovering the new SHO for the M2ME, or, the M2ME discovering the new SHO through the RO;
the RO connecting with the new SHO, and registering the M2ME in the new SHO.

In order to solve the aforementioned technical problem, the present invention provides a system for changing a selected home operator of a machine to machine (M2M) equipment, comprising: a machine to machine equipment (M2ME), a new selected home operator (SHO), an old SHO, a platform validation authority center (PVA) and a registration operator (RO), wherein:
the new SHO is configured to, receive parameters of the M2ME, and after verifying the M2ME by the PVA and the M2ME passes the verification, provide an MCIM of the new SHO to the M2ME through a connection between the M2ME and the RO provided by the old SHO or through a connection between the M2ME and the RO established by a trusted environment (TRE) functional entity;
the M2ME is configured to install the new MCIM in a universal integrated circuit card (UICC);
wherein, both the UICC and the TRE functional entity are located in the M2ME.

The aforementioned system can also have the following feature:
the new SHO is further configured to send the MCIM of the new SHO to the RO after verifying the M2ME by the PVA and the M2ME passes the verification;
the RO is configured to send the new MCIM to the M2ME through the connection provided by the old SHO;
the M2ME is further configured to delete information of the old SHO in the M2ME.

The aforementioned system can also have the following feature:
the RO is configured to activate the TRE functional entity in the M2ME after receiving information of the new SHO and the parameters of the M2ME sent by an M2ME subscriber; and, the RO is further configured to send the new MCIM to the M2ME through the connection established by the TRE functional entity;
the M2ME is further configured to establish the connection with the RO through the TRE functional entity, and, delete information of the old SHO in the M2ME;
the new SHO is further configured to authorize the RO to provide the MCIM of the new SHO after verifying the M2ME by the PVA and the M2ME passes the verification.

The aforementioned system can also have the following feature:
the RO is further configured to notify the old SHO that the M2ME changes the SHO after receiving information of the new SHO and the parameters of the M2ME sent by an M2ME subscriber; and, the RO is further configured to send the new MCIM to the M2ME through the connection established by the TRE functional entity;
the old SHO is configured to activate the TRE functional entity in the M2ME through an over the air (OTA) mode;
the M2ME is further configured to establish the connection with the RO through the TRE functional entity, and, delete information of the old SHO in the M2ME;
the new SHO is further configured to authorize the RO to provide the MCIM of the new SHO after verifying the M2ME by the PVA and the M2ME passes the verification.

The aforementioned system can also have the following feature:
the old SHO is configured to activate the TRE functional entity in the M2ME through an over the air (OTA) mode after receiving information of the new SHO and the parameters of the M2ME sent by an M2ME subscriber;
the M2ME is further configured to establish the connection with the RO through the TRE functional entity, and, delete information of the old SHO in the M2ME;
the new SHO is further configured to authorize the RO to provide the MCIM of the new SHO after verifying the M2ME by the PVA and the M2ME passes the verification;
the RO is configured to send the new MCIM to the M2ME through the connection established by the TRE functional entity.

The present invention makes the M2M equipment combine with the TRE functional entity to provide the initial connection and the high security of the UICC, which realizes changing the selected home operator of the M2ME and ensures the security of the MCIM.

### Brief Description of Drawings

FIG. 1 is a schematic diagram of an M2ME architecture of a UICC (a TRE functional entity is in the M2ME) in accordance with an embodiment of the present invention;
FIG. 2 is an architecture diagram of an M2M system of a UICC (a TRE functional entity is in the M2ME) in accordance with an embodiment of the present invention;
FIG. 3 is a flow chart of changing a selected home operator of an M2M equipment by using a connection provided by an old SHO in accordance with an embodiment of the present invention;
FIG. 4 is a flow chart of changing a selected home operator of an M2M equipment through an RO in accordance with an embodiment of the present invention (embodiment 1);
FIG. 5 is a flow chart of changing a selected home operator of an M2M equipment through an RO in accordance with an embodiment of the present invention (embodiment 2);
FIG. 6 is a flow chart of changing a selected home operator of an M2M equipment through an RO by using an over the air (OTA) mode in accordance with an embodiment of the present invention (embodiment 1);
FIG. 7 is a flow chart of changing a selected home operator of an M2M equipment through an RO by using an OTA mode in accordance with an embodiment of the present invention (embodiment 2);
FIG. 8 is a flow chart of changing a selected home operator of an M2M equipment through an old SHO by using an OTA mode in accordance with an embodiment of the present invention (embodiment 1); and
FIG. 9 is a flow chart of changing a selected home operator of an M2M equipment through an old SHO by using an OTA mode in accordance with an embodiment of the present invention (embodiment 2).

### Preferred Embodiments of the Present Invention

In the present invention, the TRE functional entity and the UICC are combined to realize changing the selected home operator of the M2ME, which ensures the security of the MCIM. Among them, the SHO can be replaced by adopting two modes:
mode one: a new SHO receives parameters of an M2ME, and after verifying the M2ME by a platform validation authority center (PVA) and the M2ME passes the verification, provides an MCIM of the new SHO to the M2ME through a connection between the M2ME and an RO (Registration Operator) provided by an old SHO; and the M2ME installs the new MCIM in a Universal Integrated Circuit Card (UICC);
mode two: a new SHO receives parameters of an M2ME, and after verifying the M2ME by a PVA and the M2ME passes the verification, provides an MCIM of the new SHO to the M2ME through a connection between the M2ME and an RO established by a TRE functional entity; and the M2ME installs the new MCIM in a UICC;
wherein, the UICC is located in the M2ME and the TRE functional entity is located in the M2ME.

In the following, the present invention will be illustrated in detail in combination with the accompanying drawings and specific embodiments.

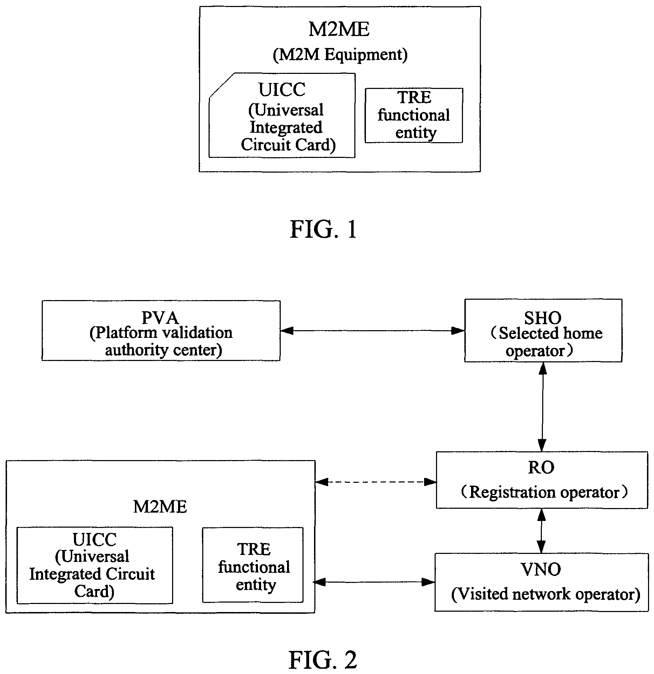

As shown in FIG. 1, it is a schematic diagram of an M2ME architecture based on a UICC (in which a TRE function entity is located in the M2ME) in accordance with an embodiment of the present invention. In that architecture, the TRE functional entity is located in the M2ME, and the UICC is installed in the M2ME.

As shown in FIG. 2, it is an architecture diagram of an M2M system based on a UICC (in which a TRE functional entity is located in the M2ME) in accordance with an embodiment of the present invention.

The M2ME takes a PICD (Provisional Connectivity Identity) as its private identification. To make the M2ME register to a 3GPP network unrelated to a home operator selected in the future, the PCID needs to be installed in the M2ME through the supplier. The PCID and the IMSI have the same format. Wherein, the TRE functional entity is a trusted environment provided by the M2ME, and it provides protection and isolation based on the hardware and software for providing, storing, executing and managing the MCIM; the security of the PCID is further ensured by the TRE functional entity, for example, the secure storage, retrieval and use of the PCID are implemented by the TRE functional entity. One TRE functional entity can be verified by an authorized external proxy at any time as desired. The UICC is installed in the M2ME.

The VNO (Visited Network Operator) provides the M2ME with an initial connection for an initial registration, as well as the provision of the MCIM and credential.

The RO can have the following functions:
1) DPF: MCIM Download and Provisioning Function;
2) DRF: Discovery and Registration Function;
3) ICF: Initial Connectivity Function.

The SHO provides an operation service for the M2ME, and authorizes the DPF to provide the M2ME with the MCIM generated by the SHO or by the DPF on behalf of the SHO.

The PVA is used to verify the M2ME.

In the present invention, when the MCIM is located in the UICC, the MCIM refers to USIM/ISIM. To describe conveniently, in the present invention, regardless of whether the MCIM is located in the UICC, only the MCIM can be used, but the USIM/ISIM is not used.

In the present invention, both the UICC and the TRE functional entity are located in the M2ME. The initial MCIM can be pre-installed in the UICC, or can be installed in the UICC through a remotely providing method. When the initial MCIM is installed in the UICC through the remotely providing method, the TRE functional entity is used to establish the initial connection between the M2ME and the visited network operator.

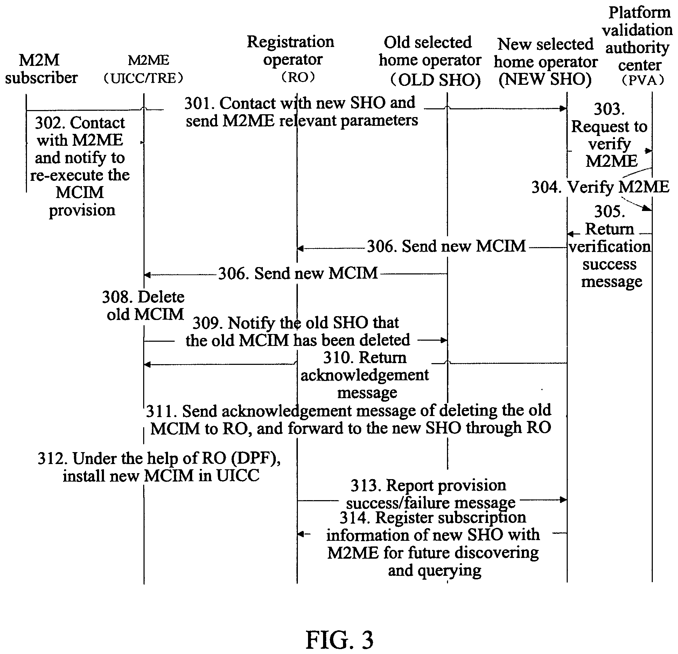

FIG. 3 is a flow chart of changing the selected home operator of the M2ME by using the connection provided by the old SHO of the mode one applied in an embodiment of the present invention.

As shown in FIG. 3, both the UICC and the TRE functional entity are located in the M2ME, and the UICC is installed with the MCIM of the old SHO. When an M2ME subscriber wants to change the SHO due to expiration of the contract between the M2ME subscriber and the old SHO or other reasons, the M2ME subscriber contacts with the new SHO, and at the same time contacts with the M2ME to notify the M2ME to execute the MCIM re-provisioning, so as to change the SHO of the M2ME. The specific flow of changing the selected home operator of the M2ME comprises the following steps.

In step 301, when the M2ME subscriber wants to change the SHO due to expiration of the contract between the M2ME subscriber and the old SHO or other reasons, the M2ME subscriber contacts with the new SHO and sends the M2ME relevant parameters.

In step 302, the M2ME subscriber contacts with the M2ME, and notifies the M2ME to execute the MCIM re-provisioning.

In step 303, the new SHO requests the PVA to verify the M2ME.

In step 304, the PVA verifies the M2ME.

In step 305, if the verification is passed, the PVA reports a verification success status information to the new SHO.

In step 306, the new SHO sends its MCIM to the RO (DPF function).

In step 307, the RO securely sends the new MCIM to the UICC in the M2ME by using the connection provided by the old SHO.

Specifically, the OTA mode can be used to download the new MCIM to the UICC of the M2ME. At the final stage of the OTA process, a new MCIM is activated. Meanwhile, the old SHO relevant information, including the MCIM of the old SHO, the credential and other information, is deleted.

In step 308, before the M2ME provides the downloaded new MCIM to the UICC, the M2ME deletes the information of the old SHO in the M2ME, and the information of the old SHO includes the MCIM of the old SHO, credential and other information.

In step 309, the M2ME sends a message to the old SHO to notify the old SHO that the information related to the old SHO is deleted already, and the information includes the MCIM of the old SHO, credential and other information.

In step 310, the old SHO returns an acknowledgement message to the M2ME to indicate that the above messages have been received. If necessary, the old SHO deletes the M2ME relevant information.

In step 311, the M2ME sends an acknowledgement message that the old MCIM has been deleted to the RO (DPF function), and forwards the acknowledgement message to the new SHO through the RO (DPF function), and the acknowledgement message has to be security filtered when the RO (DPF function) forwards the acknowledgement message, so as to prevent any sensitive information regarding to the old SHO from being acquired by the new SHO.

In step 312, under the help of the RO (DPF function), the M2ME installs the MCIM of the new SHO in the UICC.

A variety of modes in the related art can be used to address how the RO helps the M2ME to install the MCIM of the new SHO in the UICC, and herein the process is not elaborated.

In step 313, the RO (DPF function) reports a provisioning success/failure status information to the new SHO.

In step 314, the SHO sends a message to the RO (DRF function) to register the subscription information between the new SHO and the M2ME, so as to be used to discover and query in the future.

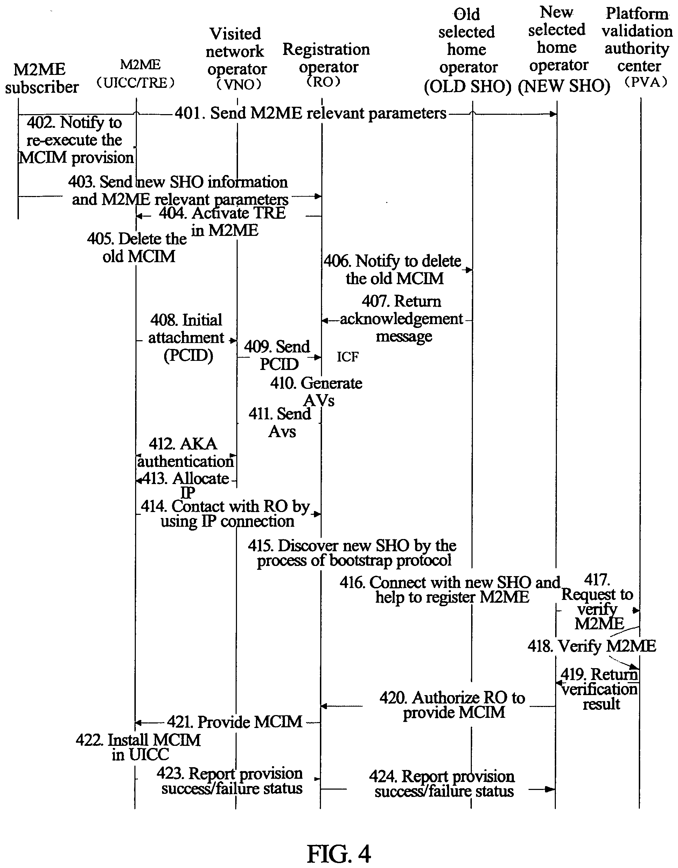

FIG. 4 is a flow chart of changing the selected home operator of the M2M equipment based on the UICC through the RO of the mode two applied in an embodiment of the present invention (embodiment 1).

As shown in FIG. 4, both the UICC and the TRE functional entity are located in the M2ME, and the UICC is installed with the MCIM of the old SHO. When the M2ME subscriber wants to change the SHO due to expiration of the contract between the M2ME subscriber and the old SHO or other reasons, the M2ME subscriber contacts with the new SHO and the RO, and meanwhile, contacts with the M2ME to notify the M2ME to execute the MCIM re-provisioning, so as to change the SHO of the M2ME. The specific flow of changing the selected home operator of the M2ME comprises the following steps.

In step 401, when the M2ME subscriber wants to change the SHO due to expiration of the contract between the M2ME subscriber and the old SHO, the M2ME subscriber contacts with the new SHO, and sends the M2ME relevant parameters.

In step 402, the M2ME subscriber contacts with the M2ME, and notifies the M2ME to execute the MCIM re-provisioning.

In step 403, the M2ME subscriber contacts with the RO, and sends the SHO information newly subscribed by the M2ME and the M2ME relevant parameters.

In step 404, the RO contacts with the M2ME through the connection provided by the old SHO, to activate the TRE functional entity in the M2ME.

In step 405, the RO helps the M2ME to delete information of the old SHO in the UICC; such as deleting the credential of the old SHO, and meanwhile, deleting the MCIM of the old SHO.

The M2ME also can manually delete the information of the old SHO in the UICC after the TRE is activated; such as deleting the credential of the old SHO, and deleting the MCIM of the old SHO at the same time.

A variety of modes in the related art can be used to address how the RO helps the M2ME to delete the information of the old SHO in the UICC, and herein the process is not elaborated.

In step 406, the RO sends a message to the old SHO to notify the old SHO that the M2ME has deleted the MCIM of the old SHO in the UICC.

In step 407, the old SHO returns an acknowledgement message to the RO to indicate that the old SHO receives the aforementioned information.

In step 408, the M2ME establishes an initial connection with the randomly selected VNO through the TRE functional entity. The M2ME, by a standard GSM/UMTS principle, decodes the network information and attaches to any VNO. In an attachment message, the M2ME sends a Provisional Connectivity ID (PCID) to the VNO.

In step 409, The VNO contacts with the RO (ICF function), and sends the PCID to the RO (ICF function). Note that, in some cases, the RO can be located in the VNO.

In step 410, after the RO (ICF function) receives the PCID, it generates a set of authentication vectors (AVs) regarding to the PCID.

In step 411, the RO sends the generated authentication vectors (AVs) to the VNO.

In step 412, the VNO authenticates the PCID/M2ME by using the AVs, it can use, but not limited to, an Authentication and Key Agreement (AKA) to authenticate.

In step 413, after the authentication is successful, the VNO provides the M2ME with an IP connection to the RO. The VNO allocates an IP address to the M2ME.

In step 414, the M2ME contacts with the RO through the IP connection provided by the VNO network.

In step 415, with the help of the RO, the M2ME discovers a new SHO, or, the RO itself discovers a new SHO for the M2ME. The new SHO discovery process can use an OMA (Open Mobile Alliance) BOOTSTRAP (i.e., the Bootstrap Protocol).

In step 416, the RO connects with the new SHO and registers the M2ME to be connected with a new SHO network in the new SHO.

In step 417, the new SHO requests the PVA (or requests the PVA through the RO) to verify the authenticity and integrity of the M2ME.

In step 418, the PVA verifies the authenticity and integrity of the M2ME.

In step 419, the PVA sends the verification result to the new SHO.

In step 420, if the verification is successful, the new SHO contacts with the RO (DPF function), and authorizes the RO (DPF function) to provide the MCIM to the M2ME.

In step 421, the RO (DPF function) sends the MCIM of the new SHO to the M2ME.

In step 422, the M2ME installs the MCIM of the new SHO in the UICC.

In step 423, the M2ME reports a MCIM provisioning success/failure status information to the RO (DPF function).

In step 424, the RO (DPF function) reports the MCIM provisioning success/failure status information to the new SHO.

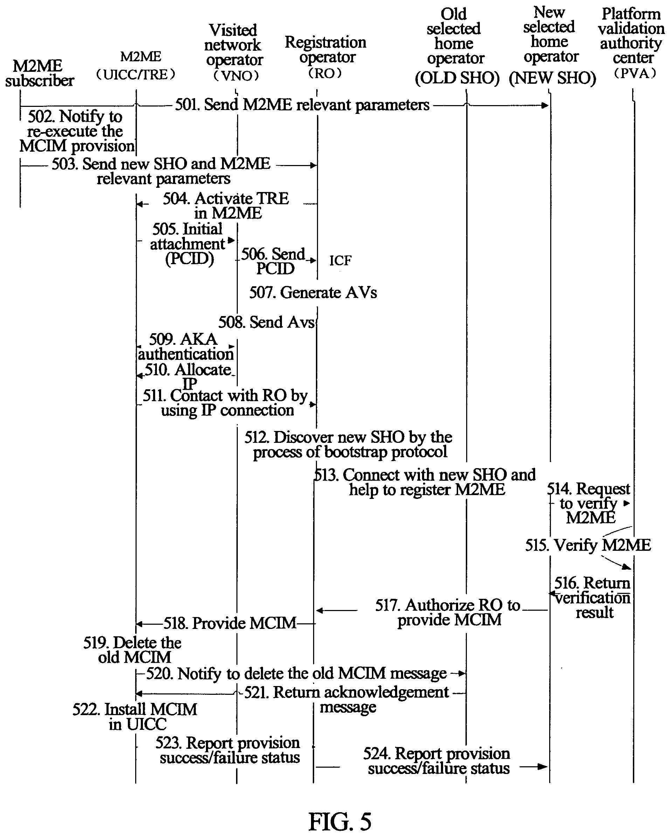

FIG. 5 is a flow chart of changing the selected home operator of the M2M equipment based on the UICC through the RO of the mode two applied in an embodiment of the present invention (embodiment 2).

As shown in FIG. 5, both the UICC and the TRE functional entity are located in the M2ME, and the UICC is installed with the MCIM of the old SHO. When the M2ME subscriber wants to change the SHO due to expiration of the contract between the M2ME subscriber and the old SHO or other reasons, the M2ME subscriber contacts with the new SHO and the RO, and meanwhile, contacts with the M2ME to notify the M2ME to execute the MCIM re-provisioning, so as to change the SHO of the M2ME. The specific flow of changing the selected home operator of the M2ME comprises the following steps.

In step 501, when the M2ME subscriber wants to change the SHO due to expiration of the contract between the M2ME subscriber and the old SHO, the M2ME subscriber contacts with the new SHO, and sends the M2ME relevant parameters.

In step 502, the M2ME subscriber contacts with the M2ME, and notifies the M2ME to execute the MCIM re-provisioning.

In step 503, the M2ME subscriber contacts with the RO, and sends the information of the SHO newly subscribed by the M2ME and the M2ME relevant parameters.

In step 504, the RO contacts with the M2ME through the connection provided by the old SHO, to activate the TRE functional entity in the M2ME.

After the TRE functional entity is activated, the old MCIM stops working.

In step 505, the M2ME establishes the initial connection with the randomly selected VNO through the TRE functional entity. The M2ME, by a standard GSM/UMTS principle, decodes the network information and attaches to any VNO. In an attachment message, the M2ME sends a PCID to the VNO.

In step 506, The VNO contacts with the RO (ICF function), and sends the PCID to the RO (ICF function). Note that, in some cases, the RO can be located in the VNO.

In step 507, after the RO (ICF function) receives the PCID, it generates a set of authentication vectors (AVs) regarding to the PCID.

In step 508, the RO sends the generated authentication vectors (AVs) to the VNO.

In step 509, the VNO uses the AVs to authenticate the PCID/M2ME, it can use, but not limited to, an AKA to authenticate.

In step 510, after the authentication is successful, the VNO provides the M2ME with an IP connection to the RO. The VNO allocates an IP address to the M2ME.

In step 511, the M2ME contacts with the RO through the IP connection provided by the VNO network.

In step 512, with the help of the RO, the M2ME discovers a new SHO, or, the RO itself discovers a new SHO for the M2ME. The new SHO discovery process can use an OMA BOOTSTRAP.

In step 513, the RO connects with the new SHO and registers the M2ME to be connected with a new SHO network in the new SHO.

In step 514, the new SHO requests the PVA (or requests the PVA through the RO) to verify the authenticity and integrity of the M2ME.

In step 515, the PVA verifies the authenticity and integrity of the M2ME.

In step 516, the PVA sends the verification result to the new SHO.

In step 517, if the verification is successful, the new SHO contacts with the RO (DPF function), and authorizes the RO (DPF function) to provide the MCIM to the M2ME.

In step 518, the RO (DPF function) sends the MCIM of the new SHO to the M2ME.

In step 519, before installing the MCIM obtained from the new SHO, the M2ME deletes information of the old SHO in the UICC, such as the credential of the old SHO, and meanwhile, deletes the MCIM of the old SHO.

In step 520, after deleting the old MCIM in the UICC, the M2ME sends the message that the old MCIM has been deleted to the old SHO through the RO.

In step 521, the old SHO returns an acknowledgement message to the M2ME through the RO to indicate that the old SHO receives the aforementioned information. If necessary, the RO forwards the acknowledgement message to the new SHO. The acknowledgement message has to be privately filtered before the RO forwards the acknowledgement message, so as to prevent the sensitive information related to the old SHO from being acquired by the new SHO.

In step 522, the M2ME, directly or under the help of the RO (DPF), installs the MCIM in the UICC.

In step 523, after the M2ME directly installs the MCIM in the UICC, the M2ME reports an MCIM provisioning success/failure status information to the RO (DPF function). If the M2ME installs the MCIM in the UICC under the help of the RO (DPF), then the RO (DPF) already knows whether the MCIM has been successfully installed in the UICC.

In step 524, the RO (DPF function) reports the MCIM provisioning success/failure status information to the new SHO.

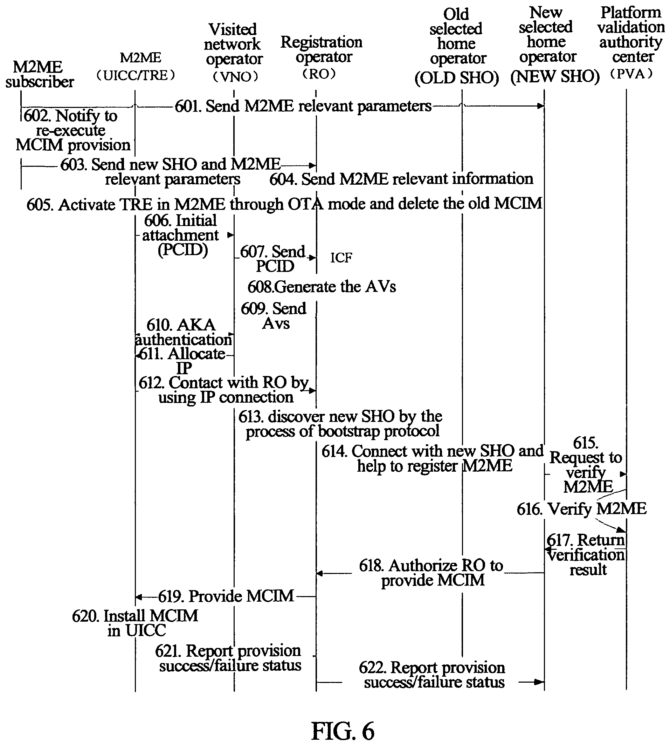

FIG. 6 is a flow chart of changing the selected home operator of the M2M equipment through the RO by using the OTA (Over The Air) with the mode two in accordance with an embodiment of the present invention (embodiment 1).

As shown in FIG. 6, both the UICC and the TRE functional entity are located in the M2ME, and the UICC is installed with the MCIM of the old SHO. When the M2ME subscriber wants to change the SHO due to expiration of the contract between the M2ME subscriber and the old SHO or other reasons, the M2ME subscriber contacts with the new SHO and the RO, and meanwhile, contacts with the M2ME to notify the M2ME to execute the MCIM re-provisioning, so as to change the SHO of the M2ME. The specific flow of changing the selected home operator of the M2ME comprises the following steps.

In step 601, when the M2ME subscriber wants to change the SHO due to expiration of the contract between the M2ME subscriber and the old SHO, the M2ME subscriber contacts with the new SHO, and sends the M2ME relevant parameters.

In step 602, the M2ME subscriber contacts with the M2ME, and notifies the M2ME to execute the MCIM re-provisioning.

In step 603, the M2ME subscriber contacts with the RO, and sends the information of the SHO newly subscribed by the M2ME and the M2ME relevant parameters.

In step 604, the RO contacts with the old SHO, and notifies the old SHO of the relevant information of the M2ME who will change the selected home operator.

In step 605, the old SHO activates the TRE functional entity in the M2ME through the OTA mode, and deletes information of the old SHO in the UICC of the M2ME, such as the credential of the old SHO, and meanwhile, deletes the MCIM of the old SHO.

In step 606, the M2ME establishes the initial connection with the randomly selected VNO through the TRE functional entity. The M2ME, by a standard GSM/UMTS principle, decodes the network information and attaches to any VNO. In an attachment message, the M2ME sends a PCID to the VNO.

In step 607, the VNO contacts with the RO (ICF function), and sends the PCID to the RO (ICF function). Note that, in some cases, the RO can be located in the VNO.

In step 608, after the RO (ICF function) receives the PCID, it generates a set of authentication vectors (AVs) regarding to the PCID.

In step 609, the RO sends the generated authentication vectors (AVs) to the VNO.

In step 610, the VNO uses the AVs to authenticate the PCID/M2ME, it can use, but not limited to, the AKA to authenticate.

In step 611, after the authentication is successful, the VNO provides the M2ME with the IP connection to the RO. The VNO allocates an IP address to the M2ME.

In step 612, the M2ME contacts with the RO through the IP connection provided by the VNO network.

In step 613, with the help of the RO, the M2ME discovers a new SHO, or, the RO itself discovers a new SHO for the M2ME. The new SHO discovery process can use the OMA BOOTSTRAP.

In step 614, the RO connects with the new SHO and registers the M2ME to be connected with the new SHO network in the new SHO.

In step 615, the new SHO requests the PVA (or requests the PVA through the RO) to verify the authenticity and integrity of the M2ME.

In step 616, the PVA verifies the authenticity and integrity of the M2ME.

In step 617, the PVA sends the verification result to the new SHO.

In step 618, if the verification is successful, the new SHO contacts with the RO (DPF function), and authorizes the RO (DPF function) to provide the MCIM to the M2ME.

In step 619, the RO (DPF function) sends the MCIM of the new SHO to the M2ME.

In step 620, the M2ME installs the MCIM of the new SHO in the UICC.

In step 621, the M2ME reports an MCIM provisioning success/failure status information to the RO (DPF function).

In step 622, the RO (DPF function) reports the MCIM provisioning success/failure status information to the new SHO.

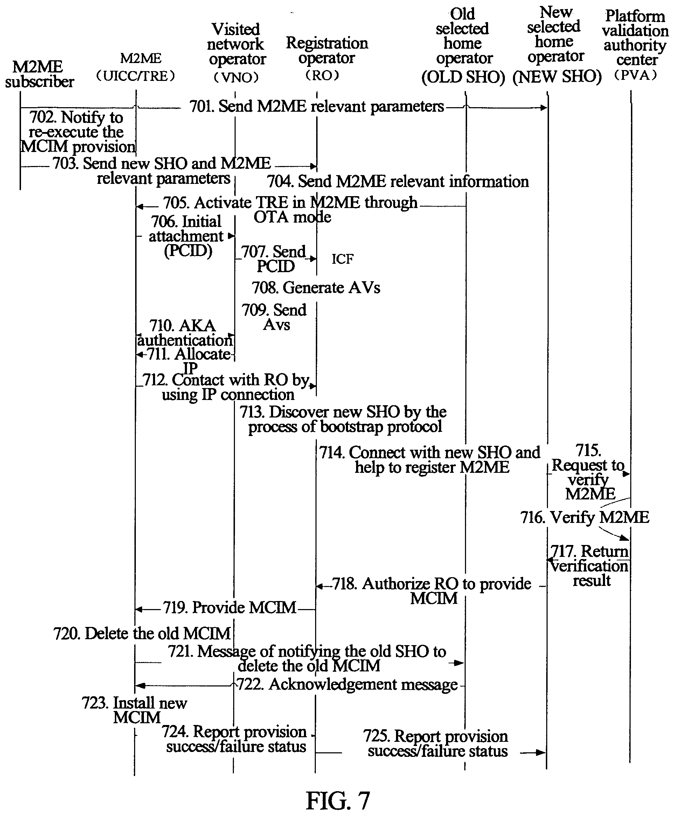

FIG. 7 is a flow chart of changing the selected home operator of the M2M equipment by using the OTA mode and through the RO with the mode two in accordance with an embodiment of the present invention (embodiment 2).

As shown in FIG. 7, both the UICC and the TRE functional entity are located in the M2ME, and the UICC is installed with the MCIM of the old SHO. When the M2ME subscriber wants to change the SHO due to expiration of the contract between the M2ME subscriber and the old SHO or other reasons, the M2ME subscriber contacts with the new SHO and the RO, and meanwhile, contacts with the M2ME to notify the M2ME to execute the MCIM re-provisioning, so as to change the SHO of the M2ME. The specific flow of changing the selected home operator of the M2ME comprises the following steps.

In step 701, when the M2ME subscriber wants to change the SHO due to expiration of the contract between the M2ME subscriber and the old SHO, the M2ME subscriber contacts with the new SHO, and sends the M2ME relevant parameters.

In step 702, the M2ME subscriber contacts with the M2ME, and notifies the M2ME to execute the MCIM re-provisioning.

In step 703, the M2ME subscriber contacts with the RO, and sends the information of the SHO newly subscribed by the M2ME and the M2ME relevant parameters.

In step 704, the RO contacts with the old SHO, and notifies the old SHO of the relevant information of the M2ME who will change the selected home operator.

In step 705, the old SHO activates the TRE functional entity in the M2ME through the OTA mode.

After the TRE functional entity is activated, the old MCIM stops working.

In step 706, the M2ME establishes the initial connection with the randomly selected VNO through the TRE functional entity. The M2ME, by a standard GSM/UMTS principle, decodes the network information and attaches to any VNO. In an attachment message, the M2ME sends a PCID to the VNO.

In step 707, the VNO contacts with the RO (ICF function), and sends the PCID to the RO (ICF function). Note that, in some cases, the RO can be located in the VNO.

In step 708, after the RO (ICF function) receives the PCID, it generates a set of authentication vectors (AVs) regarding to the PCID.

In step 709, the RO sends the generated authentication vectors (AVs) to the VNO.

In step 710, the VNO uses the AVs to authenticate the PCID/M2ME, it can use, but not limited to, the AKA to authenticate.

In step 711, after the authentication is successful, the VNO provides the M2ME with the IP connection to the RO. The VNO allocates an IP address to the M2ME.

In step 712, the M2ME contacts with the RO through the IP connection provided by the VNO network.

In step 713, with the help of the RO, the M2ME discovers a new SHO, or, the RO itself discovers a new SHO for the M2ME. The new SHO discovery process can use the OMA BOOTSTRAP.

In step 714, the RO connects with the new SHO and registers the M2ME to be connected with the new SHO network in the new SHO.

In step 715, the new SHO requests the PVA (or requests the PVA through the RO) to verify the authenticity and integrity of the M2ME.

In step 716, the PVA verifies the authenticity and integrity of the M2ME.

In step 717, the PVA sends the verification result to the new SHO.

In step 718, if the verification is successful, the new SHO contacts with the RO (DPF function), and authorizes the RO (DPF function) to provide the MCIM to the M2ME.

In step 719, the RO (DPF function) sends the MCIM of the new SHO to the M2ME.

In step 720, before installing the MCIM obtained from the new SHO, the M2ME deletes information of the old SHO in the UICC, such as the credential of the old SHO, and meanwhile, deletes the MCIM of the old SHO.

In step 721, after deleting the old MCIM in the UICC, the M2ME sends a message that the old MCIM has been deleted to the old SHO through the RO.

In step 722, the old SHO returns an acknowledgement message to the M2ME through the RO to indicate that the old SHO receives the aforementioned information. If necessary, the RO forwards the acknowledgement message to the new SHO. The acknowledgement message has to be privately filtered before the RO forwards the acknowledgement message, so as to prevent sensitive information related to the old SHO from being acquired by the new SHO.

In step 723, the M2ME, directly or under the help of the RO (DPF), installs the MCIM in the UICC.

In step 724, after the M2ME directly installs the MCIM in the UICC, the M2ME reports an MCIM provisioning success/failure status information to the RO (DPF function). If the M2ME installs the MCIM in the UICC under the help of the RO (DPF), then the RO (DPF) already knows whether the MCIM has been successfully installed in the UICC.

In step 725, the RO (DPF function) reports the MCIM provisioning success/failure status information to the new SHO.

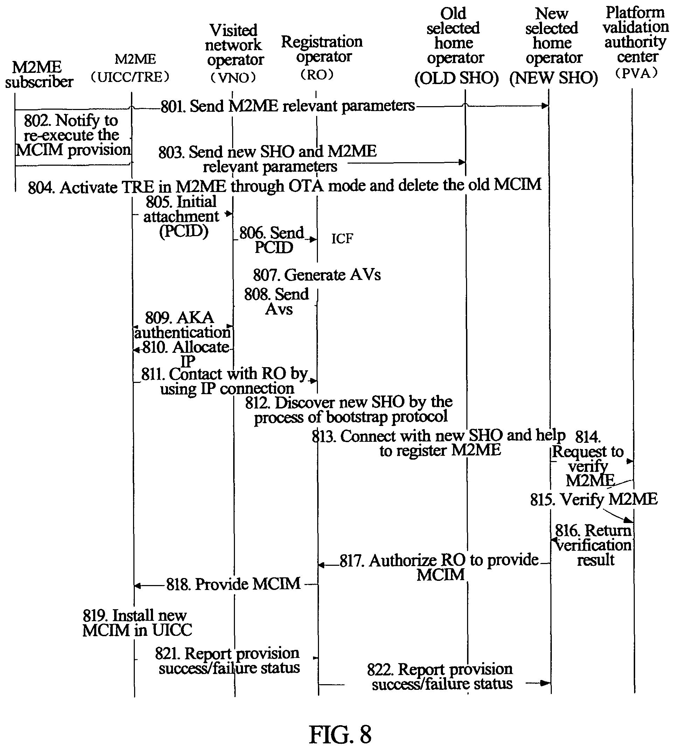

FIG. 8 is a flow chart of changing the selected home operator of the M2M equipment by using the OTA mode and through the old SHO with the mode two in accordance with an embodiment of the present invention (embodiment 1).

As shown in FIG. 8, both the UICC and the TRE functional entity are located in the M2ME, and the UICC is installed with the MCIM of the old SHO. When the M2ME subscriber wants to change the SHO due to expiration of the contract between the M2ME subscriber and the old SHO or other reasons, the M2ME subscriber contacts with the new SHO and the RO, and meanwhile, contacts with the M2ME to notify the M2ME to execute the MCIM re-provisioning, so as to change the SHO of the M2ME. The specific flow of changing the selected home operator of the M2ME comprises the following steps.

In step 801, when the M2ME subscriber wants to change the SHO due to expiration of the contract between the M2ME subscriber and the old SHO, the M2ME subscriber contacts with the new SHO, and sends the M2ME relevant parameters.

In step 802, the M2ME subscriber contacts with the M2ME, and notifies the M2ME to execute the MCIM re-provisioning.

In step 803, the M2ME subscriber contacts with the old SHO, and sends the information of the SHO newly subscribed by the M2ME and the M2ME relevant parameters.

In step 804, the old SHO activates the TRE functional entity in the M2ME through the OTA mode, and deletes information of the old SHO in the UICC of the M2ME, such as the credential of the old SHO, and meanwhile, deletes the MCIM of the old SHO.

In step 805, the M2ME establishes the initial connection with the randomly selected VNO through the TRE functional entity. The M2ME, by a standard GSM/UMTS principle, decodes the network information and attaches to any VNO. In an attachment message, the M2ME sends a PCID to the VNO.

In step 806, the VNO contacts with the RO (ICF function), and sends the PCID to the RO (ICF function). Note that, in some cases, the RO can be located in the VNO.

In step 807, after the RO (ICF function) receives the PCID, it generates a set of authentication vectors (AVs) regarding to the PCID.

In step 808, the RO sends the generated authentication vectors (AVs) to the VNO.

In step 809, the VNO uses the AVs to authenticate the PCID/M2ME, it can use, but not limited to, the AKA to authenticate.

In step 810, after the authentication is successful, the VNO provides the M2ME with the IP connection to the RO. The VNO allocates an IP address to the M2ME.

In step 811, the M2ME contacts with the RO through the IP connection provided by the VNO network.

In step 812, with the help of the RO, the M2ME discovers a new SHO, or, the RO itself discovers a new SHO for the M2ME. The new SHO discovery process can use the OMA BOOTSTRAP.

In step 813, the RO connects with the new SHO and registers the M2ME to be connected with the new SHO network in the new SHO.

In step 814, the new SHO requests the PVA (or requests the PVA through the RO) to verify the authenticity and integrity of the M2ME.

In step 815, the PVA verifies the authenticity and integrity of the M2ME.

In step 816, the PVA sends the verification result to the new SHO.

In step 817, if the verification is successful, the new SHO contacts with the RO (DPF function), and authorizes the RO (DPF function) to provide the new MCIM to the M2ME.

In step 818, the RO (DPF function) sends the MCIM of the new SHO to the M2ME.

In step 819, the M2ME installs the MCIM of the new SHO in the UICC.

In step 820, the M2ME reports an MCIM provisioning success/failure status information to the RO (DPF function).

In step 821, the RO (DPF function) reports the MCIM provisioning success/failure status information to the new SHO.

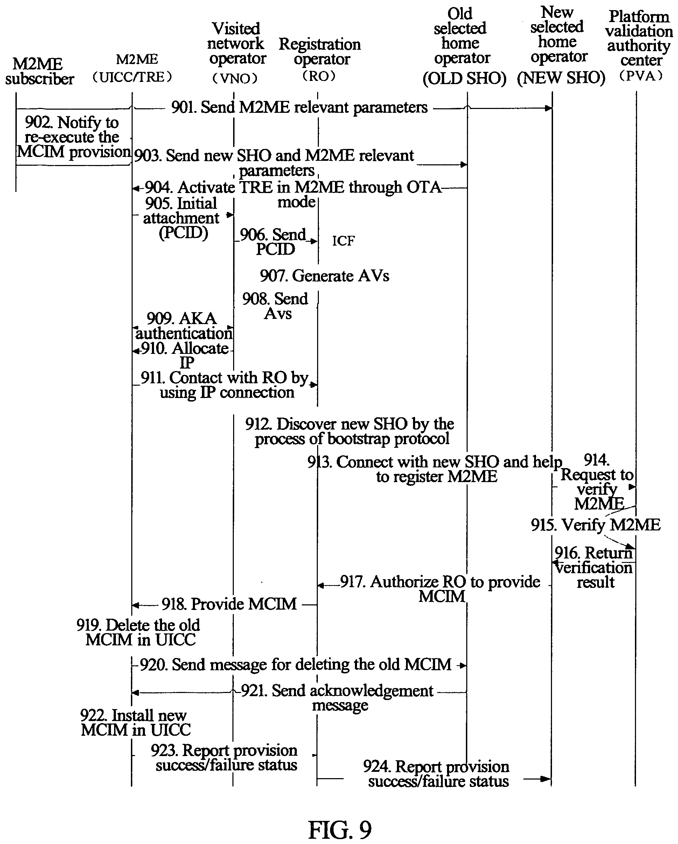

FIG. 9 is a flow chart of changing the selected home operator of the M2M equipment by using the OTA mode and through the old SHO with the mode two in accordance with an embodiment of the present invention (embodiment 2).

As shown in FIG. 9, both the UICC and the TRE functional entity are located in the M2ME, and the UICC is installed with the MCIM of the old SHO. When the M2ME subscriber wants to change the SHO due to expiration of the contract between the M2ME subscriber and the old SHO or other reasons, the M2ME subscriber contacts with the new SHO and the RO, and meanwhile, contacts with the M2ME to notify the M2ME to execute the MCIM re-provisioning, so as to change the SHO of the M2ME. The specific flow of changing the selected home operator of the M2ME comprises the following steps.

In step 901, when the M2ME subscriber wants to change the SHO due to expiration of the contract between the M2ME subscriber and the old SHO, the M2ME subscriber contacts with the new SHO, and sends the M2ME relevant parameters.

In step 902, the M2ME subscriber contacts with the M2ME, and notifies the M2ME to execute the MCIM re-provisioning.

In step 903, the M2ME subscriber contacts with the old SHO, and sends the information of the SHO newly subscribed by the M2ME and the M2ME relevant parameters.

In step 904, the old SHO activates the TRE functional entity in the M2ME through the OTA mode.

After the TRE functional entity is activated, the old MCIM stops working.

In step 905, the M2ME establishes the initial connection with the randomly selected VNO through the TRE functional entity. The M2ME, by a standard GSM/UMTS principle, decodes the network information and attaches to any VNO. In an attachment message, the M2ME sends a PCID to the VNO.

In step 906, the VNO contacts with the RO (ICF function), and sends the PCID to the RO (ICF function). Note that, in some cases, the RO can be located in the VNO.

In step 907, after the RO (ICF function) receives the PCID, it generates a set of authentication vectors (AVs) regarding to the PCID.

In step 908, the RO sends the generated authentication vectors (AVs) to the VNO.

In step 909, the VNO uses the AVs to authenticate the PCID/M2ME, it can use, but not limited to, the AKA to authenticate.

In step 910, after the authentication is successful, the VNO provides the M2ME with the IP connection to the RO. The VNO allocates an IP address to the M2ME.

In step 911, the M2ME contacts with the RO through the IP connection provided by the VNO network.

In step 912, with the help of the RO, the M2ME discovers a new SHO, or, the RO itself discovers a new SHO for the M2ME. The new SHO discovery process can use the OMA BOOTSTRAP.

In step 913, the RO connects with the new SHO and registers the M2ME to be connected with the new SHO network in the new SHO.

In step 914, the new SHO requests the PVA (or requests the PVA through the RO) to verify the authenticity and integrity of the M2ME.

In step 915, the PVA verifies the authenticity and integrity of the M2ME.

In step 916, the PVA sends the verification result to the new SHO.

In step 917, if the verification is successful, the new SHO contacts with the RO (DPF function), and authorizes the RO (DPF function) to provide the MCIM to the M2ME.

In step 918, the RO (DPF function) sends the MCIM of the new SHO to the M2ME.

In step 919, before installing the MCIM obtained from the new SHO, the M2ME deletes information of the old SHO in the UICC, such as the credential of the old SHO, and meanwhile, deletes the MCIM of the old SHO.

In step 920, after deleting the old MCIM in the UICC, the M2ME sends a message that the old MCIM has been deleted to the old SHO through the RO.

In step 921, the old SHO returns an acknowledgement message to the M2ME through the RO to indicate that the old SHO receives the aforementioned information. If necessary, the RO forwards the acknowledgement message to the new SHO. The acknowledgement message has to be privately filtered before the RO forwards the acknowledgement message, so as to prevent sensitive information related to the old SHO from being acquired by the new SHO.

In step 922, the M2ME, directly or under the help of the RO (DPF), installs the MCIM in the UICC.

In step 923, after the M2ME directly installs the MCIM in the UICC, the M2ME reports an MCIM provisioning success/failure status information to the RO (DPF function). If the M2ME installs the MCIM in the UICC under the help of the RO (DPF), then the RO (DPF) already knows whether the MCIM has been successfully installed in the UICC.

In step 924, the RO (DPF function) reports the MCIM provisioning success/failure status information to the new SHO.

A system for changing the selected home operator of the M2M equipment in accordance with an embodiment of the present invention, comprising: an M2ME, a new SHO, an old SHO, a PVA and an RO.

The new SHO is configured to, receive parameters of the M2ME, and after verifying the M2ME by the PVA and the M2ME passes the verification, provide an MCIM of the new SHO to the M2ME through a connection between the M2ME and the RO provided by the old SHO or through a connection between the M2ME and the RO established by a TRE functional entity;
the M2ME is configured to install the new MCIM in a UICC;
wherein, both the UICC and the TRE functional entity are located in the M2ME.

The new SHO is further configured to send the MCIM of the new SHO to the RO after verifying the M2ME by the PVA and the M2ME passes the verification; the RO is configured to send the new MCIM to the M2ME through the connection provided by the old SHO; the M2ME is further configured to delete information of the old SHO in the M2ME, such as the old MCIM.

The RO is configured to activate the TRE functional entity in the M2ME after receiving information of the new SHO and the parameters of the M2ME sent by an M2ME subscriber; and, the RO sends the new MCIM to the M2ME through the connection established by the TRE functional entity; the M2ME is further configured to establish the connection with the RO through the TRE functional entity, and, is configured to delete information of the old SHO in the M2ME, such as the old MCIM; the new SHO is further configured to authorize the RO to provide the MCIM of the new SHO after verifying the M2ME by the PVA and the M2ME passes the verification.

The RO is configured to notify the old SHO that the M2ME changes the SHO after receiving information of the new SHO and the parameters of the M2ME sent by an M2ME subscriber; and, the RO sends the new MCIM to the M2ME through the connection established by the TRE functional entity; the old SHO is configured to activate the TRE functional entity in the M2ME through an OTA mode; the M2ME is further configured to establish the connection with the RO through the TRE functional entity, and, is configured to delete information of the old SHO in the M2ME; the new SHO is further configured to authorize the RO to provide the MCIM of the new SHO after verifying the M2ME by the PVA and the M2ME passes the verification.

The old SHO is configured to activate the TRE functional entity in the M2ME through an OTA mode after receiving information of the new SHO and the parameters of the M2ME sent by an M2ME subscriber; the M2ME is further configured to establish the connection with the RO through the TRE functional entity, and, is configured to delete information of the old SHO in the M2ME; the new SHO is further configured to authorize the RO to provide the MCIM of the new SHO after verifying the M2ME by the PVA and the M2ME passes the verification; the RO is configured to send the new MCIM to the M2ME through the connection established by the TRE functional entity.

Although the present invention is described in combination with the specific embodiments, for those skilled in the art, the present invention can be modified and changed without departing from the scope of the present invention as defined in the appending claims.

### Industrial Applicability

The present invention provides a method and system for changing the selected home operator of the M2ME, which, by making the M2ME combine with the TRE functional entity to provide the initial connection and the high security of the UICC, realizes changing the selected home operator of the M2ME and ensures the security of the MCIM.

## Claims

1. A method for changing a selected home operator of a machine to machine, M2M, equipment, comprising:
a new selected home operator, SHO, receiving parameters of a machine to machine equipment, M2ME, and after verifying the M2ME by a platform validation authority center, PVA, and the M2ME passes the verification, providing a machine communication identity module, MCIM, of the new SHO to the M2ME through a connection between the M2ME and a registration operator, RO, established by a trusted environment, TRE, functional entity; and the M2ME installing the new MCIM in a universal integrated circuit card, UICC;
wherein, both the UICC and the TRE functional entity are located in the M2ME,
wherein, the step of the new SHO receiving the parameters of the M2ME and providing the MCIM to the M2ME comprises:
an M2ME subscriber sending the parameters of the M2ME to the new SHO, and notifying the M2ME to execute an MCIM re-provisioning, and, sending information of the new SHO and the parameters of the M2ME to the RO;
the RO activating the TRE functional entity in the M2ME;
the M2ME establishing the connection with the RO through the TRE functional entity, and the RO registering the M2ME in the new SHO;
the new SHO, after verifying the M2ME by the PVA and the M2ME passes the verification, authorizing the RO to provide the MCIM of the new SHO;
the RO sending the new MCIM to the M2ME through the connection established by the TRE functional entity,
wherein, the step of the M2ME establishing the connection with the RO through the TRE functional entity and the RO registering the M2ME in the new SHO comprises:
the M2ME establishing an initial connection with a randomly selected visited network operator, VNO, through the TRE functional entity;
the VNO contacting with the RO, and sending a provisional connectivity identity, PCID, received from the M2ME to the RO;
the RO generating a set of authentication vectors regarding to the PCID, and sending to the VNO;
the VNO authenticating the PCID and the M2ME by using the authentication vectors, and after the authentication is passed, the VNO providing the M2ME with an IP connection to the RO;
the M2ME contacting with the RO through the IP connection provided by the VNO;
the RO discovering the new SHO for the M2ME, or, the M2ME discovering the new SHO through the RO;
the RO connecting with the new SHO, and registering the M2ME in the new SHO.

2. The method according to claim 1, wherein,
after performing the step of the RO activating the TRE functional entity in the M2ME and before performing the step of the M2ME establishing the connection with the RO through the TRE functional entity, a step further performed is: the M2ME deleting information of the old SHO in the M2ME; or,
after performing the step of the RO sending the new MCIM to the M2ME and before performing the step of the M2ME installing the new MCIM in the UICC, a step further performed is: the M2ME deleting information of the old SHO in the M2ME;
wherein, the information of the old SHO comprises the MCIM of the old SHO.

3. The method according to claim 1, wherein, the step of the RO activating the TRE functional entity in the M2ME comprises the old SHO activating the TRE functional entity in the M2ME through an over the air, OTA, mode,
wherein, after performing the step of sending information of the new SHO and the parameters of the M2ME to the RO and before performing the step of the RO activating the TRE functional entity in the M2ME, a step further performed is:
the RO notifying the old SHO that the M2ME changes the SHO.

4. The method according to claim 1, wherein, the step of sending information of the new SHO and the parameters of the M2ME to the RO comprises sending information of the new SHO and the parameters of the M2ME to the old SHO,
wherein, the step of the RO activating the TRE functional entity in the M2ME comprises the old SHO activating the TRE functional entity in the M2ME through an over the air, OTA, mode.

5. The method according to claim 3 or 4, wherein,
in the step of the old SHO activating the TRE functional entity in the M2ME, the old SHO further deletes information of the old SHO in the M2ME at the same time; or,
after performing the step of the RO sending the new MCIM to the M2ME and before performing the step of the M2ME installing the new MCIM in the UICC, a step further performed is: the M2ME deleting information of the old SHO in the M2ME;
wherein, the information of the old SHO comprises the MCIM of the old SHO.

6. A system for changing a selected home operator of a machine to machine, M2M, equipment, comprising: a machine to machine equipment, M2ME, a new selected home operator, SHO, an old SHO, a platform validation authority center, PVA, and a registration operator, RO, wherein:
the new SHO is configured to, receive parameters of the M2ME, and after verifying the M2ME by the PVA and the M2ME passes the verification, provide an MCIM of the new SHO to the M2ME through a connection between the M2ME and the RO established by a trusted environment, TRE, functional entity;
the M2ME is configured to install the new MCIM in a universal integrated circuit card, UICC;
wherein, both the UICC and the TRE functional entity are located in the M2ME,
wherein, the RO is configured to activate the TRE functional entity in the M2ME after receiving information of the new SHO and the parameters of the M2ME sent by an M2ME subscriber; register the M2ME in the new SHO; and send the new MCIM to the M2ME through the connection established by the TRE functional entity;
the M2ME is further configured to establish the connection with the RO through the TRE functional entity;
the new SHO is further configured to authorize the RO to provide the MCIM of the new SHO after verifying the M2ME by the PVA and the M2ME passes the verification,
wherein,
the M2ME is further configured to establish an initial connection with a randomly selected visited network operator, VNO, through the TRE functional entity; send a provisional connectivity identity, PCID, to the VNO; contact with the RO through an IP connection provided by the VNO; discover the new SHO through the RO;
the RO is further configured to receive the PCID from the VNO; generate a set of authentication vectors regarding to the PCID, and send the set of authentication vectors to the VNO; discover the new SHO for the M2ME; connect with the new SHO, and register the M2ME in the new SHO.

7. The system according to claim 6, wherein:
the M2ME is further configured to delete information of the old SHO in the M2ME,
wherein, the information of the old SHO comprises the MCIM of the old SHO.

8. The system according to claim 6, wherein:
the RO is further configured to notify the old SHO that the M2ME changes the SHO after receiving information of the new SHO and the parameters of the M2ME sent by an M2ME subscriber;
the old SHO is configured to activate the TRE functional entity in the M2ME through an over the air, OTA, mode.

9. The system according to claim 6, wherein:
the old SHO is configured to activate the TRE functional entity in the M2ME through an over the air, OTA, mode after receiving information of the new SHO and the parameters of the M2ME sent by an M2ME subscriber.

## Patentansprüche

1. Verfahren zum Wechseln eines ausgewählten Heimbenutzers einer Maschine-zu-Maschine (M2M)-Ausrüstung, das umfasst, dass:
ein neuer ausgewählten Heimbenutzer (SHO) Parameter eines Maschine-zu-Maschine-Ausrüstung (M2ME) empfängt und nach einem Verifizieren der M2ME durch ein PlattformValidierungsautoritätszentrum (PVA) und dem Bestehen der Verifizierung durch die M2ME, ein Maschinenkommunikationsidentitätsmoduls (MCIM) des neuen SHO an die M2ME über eine Verbindung zwischen der M2ME und einem Registrierungsbetreiber (RO), die von einer funktionalen Entität einer vertrauenswürdigen Umgebung (TRE) aufgebaut wird, bereitstellt; und die M2ME das neue MCIM in einer Universal-Integrated-Circuit-Card (UICC) installiert;
wobei sowohl die UICC als auch die funktionale Entität der TRE sich in der M2ME befinden,
wobei der Schritt, in dem der neue SHO die Parameter der M2ME empfängt und das MCIM an die M2ME bereitstellt, umfasst, dass:
ein M2ME-Teilnehmer die Parameter der M2ME an den neuen SHO sendet und die M2ME zum Ausführen einer erneuten Bereitstellung eines MCIM benachrichtigt und Informationen des neuen SHO und der Parameter der M2ME an den RO sendet;
der RO die funktionale Entität der TRE in der M2ME aktiviert;
die M2ME die Verbindung mit dem RO über die funktionale Entität der TRE aufbaut und der RO die M2ME in dem neuen SHO registriert;
der neue SHO nach dem Verifizieren der M2ME durch die PVA und dem Bestehen der Verifizierung durch die M2ME den RO autorisiert, das MCIM des neuen SHO bereitzustellen;
der RO das neue MCIM über die Verbindung, die durch die funktionale Entität der TRE aufgebaut ist, an die M2ME sendet, wobei der Schritt, in dem die M2ME die Verbindung mit dem RO über die funktionale Entität der TRE aufbaut und der RO die M2ME in dem neuen SHO registriert, umfasst, dass:
die M2ME eine Initialverbindung mit einem zufällig ausgewählten Betreiber eines besuchten Netzwerks (VNO) durch die funktionale Entität der TRE aufbaut;
der VNO mit dem RO einen Kontakt herstellt und eine provisorische Konnektivitätsidentität (PCID), die von der M2ME empfangen wird, an den RO sendet;
der RO einen Satz von Authentifizierungsvektoren, die die PCID betreffen, erzeugt und an den VNO sendet;
der VNO die PCID und die M2ME unter Verwendung der Authentifizierungsvektoren authentifiziert und nachdem die Authentifizierung bestanden wurde, der VNO eine IP-Verbindung zu dem RO an die M2ME bereitstellt;
die M2ME mit dem RO über die IP-Verbindung, die durch den VNO bereitgestellt ist, einen Kontakt herstellt;
der RO den neuen SHO für die M2ME erkennt oder die M2ME den neuen SHO über den RO erkennt;
der RO sich mit dem neuen SHO verbindet und die M2ME in dem neuen SHO registriert.

2. Verfahren nach Anspruch 1, wobei
nach dem Durchführen des Schritts, in dem der RO die funktionale Entität der TRE in der M2ME aktiviert, und vor dem Durchführen des Schritts, in dem die M2ME die Verbindung mit dem RO über die funktionale Entität der TRE aufbaut, ein ferner durchgeführter Schritt ist, dass: die M2ME Informationen des alten SHO in der M2ME löscht; oder,
nach dem Durchführen des Schritts, in dem der RO das neue MCIM an die M2ME sendet, und vor dem Durchführen des Schritts, in dem die M2ME das neue MCIM in der UICC installiert, ein ferner durchgeführter Schritt ist, dass: die M2ME Informationen des alten SHO in der M2ME löscht;
wobei die Informationen des alten SHO das MCIM des alten SHO umfasst.

3. Verfahren nach Anspruch 1, wobei der Schritt, in dem der RO die funktionale Entität der TRE in der M2ME aktiviert, umfasst, dass der alte SHO die funktionale Entität der TRE in der M2ME über einen Durch-die-Luft(OTA)-Modus aktiviert,
wobei nach dem Durchführen des Schritts des Sendens von Informationen des neuen SHO und der Parameter der M2ME an den RO und vor dem Durchführen des Schritts, in dem der RO die funktionale Entität der TRE in dem M2ME aktiviert, ein ferner durchgeführter Schritt ist, dass:
der RO den alten SHO benachrichtigt, dass die M2ME den SHO wechselt.

4. Verfahren nach Anspruch 1, wobei der Schritt des Sendens von Informationen des neuen SHO und der Parameter der M2ME an den RO ein Senden von Informationen des neuen SHO und der Parameter der M2ME an den alten SHO umfasst,
wobei der Schritt, in dem der RO die funktionale Entität der TRE in der M2ME aktiviert, umfasst, dass der alte SHO die funktionale Entität der TRE in der M2ME über einen Durch-die-Luft(OTA)-Modus aktiviert.

5. Verfahren nach Anspruch 3 oder 4, wobei
in dem Schritt, in dem der alte SHO die funktionale Entität der TRE in der M2ME aktiviert, der alte SHO ferner zur selben Zeit Informationen des alten SHO in der M2ME löscht; oder,
nach dem Durchführen des Schritts, in dem der RO das neue MCIM an die M2ME sendet, und vor dem Durchführen des Schritts, in dem die M2ME das neue MCIM in die UICC installiert, ein ferner durchgeführter Schritt ist, dass: die M2ME Informationen des alten SHO in der M2ME löscht;
wobei die Informationen des alten SHO das MCIM des alten SHO umfassen.

6. System zum Wechseln eines ausgewählten Heimbenutzers einer Maschine-zu-Maschine(M2M)-Ausrüstung, das Folgendes umfasst:
eine Maschine-zu-Maschine-Ausrüstung (M2ME), einen neuen ausgewählten Heimbenutzer (SHO), einen alten SHO, ein Plattformvalidierungsautoritätszentrum (PVA) und einen Registrierungsbetreiber (RO), wobei:
der neue SHO dazu konfiguriert ist, Parameter der neuen M2ME zu empfangen und nach dem Verifizieren der M2ME durch die PVA und dem Bestehen der Verifizierung durch die M2ME, ein MCIM des neuen SHO über eine Verbindung zwischen der M2ME und dem RO, die durch eine funktionale Entität einer vertrauenswürdigen Umgebung (TRE) aufgebaut wird, an die M2ME bereitzustellen;
die M2ME dazu konfiguriert ist, das neue MCIM in einer Universal-Integrated-Circuit-Card (UICC) zu installieren;
wobei sowohl die UICC als auch die funktionale Entität der TRE sich in der M2ME befinden,
wobei der RO dazu konfiguriert ist, nach dem Empfangen von Informationen des neuen SHO und den Parametern der M2ME, die durch einen M2ME-Teilnehmer gesendet wurden, die funktionale Entität der TRE in der M2ME zu aktivieren; die M2ME in dem neuen SHO zu registrieren; und das neue MCIM über die Verbindung, die durch die funktionale Entität der TRE aufgebaut wurde, an die M2ME zu senden;
die M2ME ferner dazu konfiguriert ist, die Verbindung mit dem RO über die funktionale Entität der TRE aufzubauen;
der neue SHO ferner dazu konfiguriert ist, den RO dazu zu autorisieren, nach dem Verifizieren der M2ME durch die PVA und dem Bestehen der Verifizierung durch die M2ME das MCIM des neuen SHO bereitzustellen,
wobei
die M2ME ferner dazu konfiguriert ist, eine Initialverbindung mit einem zufällig ausgewählten Betreiber eines besuchten Netzwerks (VNO) über die funktionale Entität der TRE aufzubauen;
eine provisorische Konnektivitätsidentität (PCID) an den VNO zu senden; über eine IP-Verbindung, die durch den VNO bereitgestellt ist, einen Kontakt mit dem RO herzustellen; den neuen SHO über den RO zu erkennen;
der RO ferner dazu konfiguriert ist, die PCID von dem VNO zu empfangen; einen Satz von Authentifizierungsvektoren, die die PCID betreffen, zu erzeugen und den Satz von Authentifizierungsvektoren an den VNO zu senden; den neuen SHO für die M2ME zu erkennen; sich mit dem neuen SHO zu verbinden und die M2ME in dem neuen SHO zu registrieren.

7. System nach Anspruch 6, wobei:
die M2ME ferner dazu konfiguriert ist, Informationen des alten SHO in der M2ME zu löschen,
wobei die Informationen des alten SHO das MCIM des alten SHO umfassen.

8. System nach Anspruch 6, wobei:
der RO ferner dazu konfiguriert ist, nach dem Empfangen von Informationen des neuen SHO und der Parameter der M2ME, die durch einen M2ME-Teilnehmer gesendet worden sind, den alten SHO zu benachrichtigen, dass die M2ME den SHO wechselt;
der alte SHO dazu konfiguriert ist, die funktionale Entität des TRE in der M2ME über einen Durch-die-Luft(OTA)-Modus zu aktivieren.

9. System nach Anspruch 6, wobei:
der alte SHO dazu konfiguriert ist, die funktionale Entität der TRE in der M2ME nach dem Empfangen von Informationen über den neuen SHO und den Parametern der M2ME, die durch einen M2ME-Teilnehmer gesendet worden sind, über den Durch-die-Luft(OTA)-Modus zu aktivieren.

## Revendications

1. Procédé de changement d'un opérateur nominal sélectionné d'un équipement de communication entre machines, M2M, comprenant :
la réception par un nouvel opérateur nominal sélectionné, SHO, des paramètres d'un équipement de communication entre machines, M2ME, et après vérification du M2ME par un centre d'autorisation de validation de plateforme, PVA, et si le M2ME réussit la vérification, la fourniture d'un module d'identité de communication de machine, MCIM, du nouveau SHO au M2ME via une connexion entre le M2ME et un opérateur d'enregistrement, RO, établie par une entité fonctionnelle dans un environnement fiable, TRE ; et l'installation par le M2ME du nouveau MCIM dans une carte universelle de circuit intégrée, UICC ;
dans lequel, l'UICC et l'entité fonctionnelle TRE sont situées dans le M2ME,
dans lequel, l'étape de réception par le nouveau SHO des paramètres du M2ME et la fourniture du MCIM au M2ME comprend :
l'envoi par un abonné M2ME des paramètres du M2ME au nouveau SHO et la notification au M2ME pour exécuter un réapprovisionnement de MCIM et l'envoi des informations sur le nouveau SHO et des paramètres du M2ME au RO ;
l'activation par le RO de l'entité fonctionnelle TRE dans le M2ME ;
l'établissement par le M2ME de la connexion avec le RO par l'intermédiaire de l'entité fonctionnelle TRE, et l'enregistrement par le RO du M2ME dans le nouveau SHO ;
l'autorisation par le nouveau SHO, après vérification du M2ME par le PVA et si le M2ME réussit la vérification, de la fourniture par le RO du MCIM du nouveau SHO ;
l'envoi par le RO du nouveau MCIM au M2ME par l'intermédiaire de la connexion établie par l'entité fonctionnelle TRE,
dans lequel l'étape de l'établissement par le M2ME de la connexion avec le RO par l'intermédiaire de l'entité fonctionnelle TRE et l'enregistrement par le RO du M2ME dans le nouveau SHO comprend :
l'établissement par le M2ME d'une connexion initiale avec un opérateur de réseau visité, VNO, choisi de manière aléatoire par l'intermédiaire de l'entité fonctionnelle TRE ;
la prise de contact du RO par le VNO, et l'envoi au RO d'une identité de connectivité provisoire, PCID, reçue du M2ME ;
la génération par le RO d'un ensemble de vecteurs d'authentification concernant la PCID et l'envoi au VNO ;
l'authentification par le VNO de la PCID et du M2ME à l'aide des vecteurs d'authentification et, une fois l'authentification réussie, la fourniture par le VNO du M2ME avec une connexion IP au RO ;
la prise de contact du RO par le M2ME par l'intermédiaire de la connexion IP fournie par le VNO ;
la découverte par le RO du nouveau SHO pour le M2ME, ou la découverte par le M2ME du nouveau SHO par l'intermédiaire du RO ;
la connexion par le RO au nouveau SHO et l'enregistrement du M2ME dans le nouveau SHO.

2. Procédé selon la revendication 1, dans lequel,
après avoir exécuté l'étape du RO qui active l'entité fonctionnelle TRE dans le M2ME et avant d'exécuter l'étape de l'établissement par le M2ME de la connexion avec le RO par l'intermédiaire de l'entité fonctionnelle TRE, une autre étape est exécutée : la suppression par le M2ME des informations de l'ancien SHO dans le M2ME ; ou,
après avoir exécuté l'étape de l'envoi par le RO du nouveau MCIM au M2ME et avant d'exécuter l'étape d'installation par le M2ME du nouveau MCIM dans l'UICC, une autre étape est exécutée : la suppression par le M2ME des informations de l'ancien SHO dans le M2ME ;
dans lequel, les informations de l'ancien SHO comprennent la MCIM de l'ancien SHO.

3. Procédé selon la revendication 1, dans lequel l'étape d'activation par le RO de l'entité fonctionnelle TRE dans le M2ME comprend l'activation par l'ancien SHO de l'entité fonctionnelle TRE dans le M2ME par l'intermédiaire d'un mode par liaison radio (OTA),
dans lequel, après avoir exécuté l'étape d'envoi des informations du nouveau SHO et des paramètres du M2ME au RO et avant d'exécuter l'étape d'activation par le RO de l'entité fonctionnelle TRE dans le M2ME, une autre étape est exécutée : la notification par le RO à l'ancien SHO que le M2ME modifie le SHO.

4. Procédé selon la revendication 1, dans lequel l'étape d'envoi des informations du nouveau SHO et des paramètres du M2ME au RO comprend l'envoi des informations du nouveau SHO et des paramètres du M2ME à l'ancien SHO,
dans lequel l'étape d'activation par le RO de l'entité fonctionnelle TRE dans le M2ME comprend l'activation par l'ancien SHO de l'entité fonctionnelle TRE dans le M2ME par l'intermédiaire d'un mode par liaison radio OTA.

5. Procédé selon la revendication 3 ou 4, dans lequel à l'étape de l'activation par l'ancien SHO de l'entité fonctionnelle TRE dans le M2ME, l'ancien SHO supprime en outre en même temps les informations de l'ancien SHO dans le M2ME ; ou,
après avoir exécuté l'étape de l'envoi par le RO du nouveau MCIM au M2ME et avant d'exécuter l'étape d'installation par le M2ME du nouveau MCIM dans l'UICC, une autre étape est exécutée : la suppression par le M2ME des informations de l'ancien SHO dans le M2ME ;
dans lequel, les informations de l'ancien SHO comprennent la MCIM de l'ancien SHO.

6. Procédé de changement d'un opérateur nominal sélectionné d'un équipement de communication entre machines, M2M, comprenant : un équipement de communication entre machines, M2ME, un opérateur nominal nouvellement sélectionné, SHO, un ancien SHO, un centre d'autorisation de validation de la plateforme, PVA et un opérateur d'enregistrement, RO, dans lequel:
le nouveau SHO est configuré pour recevoir les paramètres du M2ME, et après vérification du M2ME par le PVA et si le M2ME réussit la vérification, la fourniture d'un MCIM du nouveau SHO au M2ME par l'intermédiaire d'une connexion entre le M2ME et le RO établie par une entité fonctionnelle d'un environnement fiable, TRE ;
le M2ME est configuré pour installer le nouveau MCIM dans une carte universelle de circuit intégrée, UICC ;
dans lequel, l'UICC et l'entité fonctionnelle TRE sont situées dans le M2ME,
dans lequel, le RO est configuré pour activer l'entité fonctionnelle TRE dans le M2ME après avoir reçu des informations du nouveau SHO et les paramètres du M2ME envoyés par un abonné du M2ME ; enregistrer le M2ME dans le nouveau SHO ; et envoyer le nouveau MCIM au M2ME par l'intermédiaire de la connexion établie par l'entité fonctionnelle TRE ;
le M2ME est en outre configuré pour établir la connexion avec le RO par l'intermédiaire de l'entité fonctionnelle TRE ;
le nouveau SHO est en outre configuré pour autoriser le RO à fournir le MCIM du nouveau SHO après vérification du M2ME par le PVA et si le M2ME réussit la vérification,
dans lequel,
le M2ME est en outre configuré pour établir une connexion initiale avec un opérateur de réseau visité choisi de manière aléatoire, VNO, par l'intermédiaire de l'entité fonctionnelle TRE ; envoyer une identité de connectivité provisoire, PCID, au VNO ; prendre contact avec le RO par l'intermédiaire d'une connexion IP fournie par le VNO ; découvrir le nouveau SHO à travers le RO ;
le RO est en outre configuré pour recevoir la PCID du VNO ;
générer un ensemble de vecteurs d'authentification concernant la PCID et envoyer l'ensemble de vecteurs d'authentification au VNO ; découvrir le nouveau SHO pour le M2ME ; se connecter au nouveau SHO et enregistrer le M2ME dans le nouveau SHO.

7. Système selon la revendication 6, dans lequel :
le M2ME est en outre configuré pour supprimer des informations de l'ancien SHO dans le M2ME,
les informations de l'ancien SHO comprenant le MCIM de l'ancien SHO.

8. Système selon la revendication 6, dans lequel :
le RO est en outre configuré pour notifier à l'ancien SHO que le M2ME change de SHO après avoir reçu des informations sur le nouveau SHO et les paramètres du M2ME envoyés par un abonné du M2ME ;
l'ancien SHO est configuré pour activer l'entité fonctionnelle TRE dans le M2ME via un mode par liaison radio, OTA.

9. Système selon la revendication 6, dans lequel :
l'ancien SHO est configuré pour activer l'entité fonctionnelle TRE dans le M2ME par l'intermédiaire d'un mode par liaison radio, OTA, après réception des informations du nouveau SHO et des paramètres du M2ME envoyés par un abonné du M2ME.
